# FASCICULE DE BREVET EUROPEEN

(11) **EP 2 875 062 B1**
(45) Date de publication et mention de la délivrance du brevet: **30.05.2018**
(21) Numéro de dépôt: 13756567.7
(22) Date de dépôt: 18.07.2013
(51) Int. Cl.: B29K 61/00, B29K 261/00, B29K 461/00, B29C 64/153, B29K 661/00

(54) **PROCÉDÉ DE SYNTHÈSE DE POLY-ARYLE-ÉTHER-CÉTONES**
VERFAHREN ZUR HERSTELLUNG VON POLYARYLETHERKETONEN
PROCESS FOR THE SYNTHESIS OF POLY-ARYL-ETHER-KETONES

(30) Priorité: 20.07.2012 FR 1257068
(43) Date de publication de la demande: 27.05.2015
(73) Titulaire: Arkema France, 92700 Colombes (FR)
(72) Inventeur: LE, Guillaume, F-14460 Colombelles (FR); JOUANNEAU, Julien, F-27500 Corneville Sur Risle (FR); AMSTUTZ, Jérome, F-69390 Charly (FR)
(86) Numéro de dépôt international: PCT/FR2013/051735
(87) Numéro de publication internationale: WO 2014/013202

(56) Documents cités:
- WO-A2-2011/004164
- US-A- 4 611 033
- US-A- 4 665 151
- US-A- 4 698 393
- US-A- 4 816 556
- US-A- 4 826 947
- US-A- 4 841 013
- US-A- 4 874 840
- US-A- 5 081 216

## Description

L'invention concerne un procédé de synthèse de Poly-aryle-éther-cétones présentant de faibles taux de résiduels, qu'ils soient des monomères résiduels ou des solvants du procédé de synthèse.

Les Poly-aryle-éther-cétones sont des polymères hautes performances bien connus. Ils sont utilisés pour des applications contraignantes en température ou en contraintes mécaniques, voire chimiques. On retrouve ces polymères dans des domaines aussi variés que l'aéronautique, les forages off shore, les implants médicaux. Ils peuvent être mis en oeuvre par toutes les technologies de mise en oeuvre des thermoplastiques, tels que le moulage, la compression, l'extrusion, le filage, le poudrage ou encore le prototypage laser. Dans ce dernier cas il est nécessaire de disposer de poudre de diamètre et de morphologies maîtrisés, ainsi que des faibles teneurs en produits résiduels, qu'ils soient monomères ou solvants, ceci afin de minimiser leur dépôt sur les différents organes optiques de l'appareil de prototypage. En outre une bonne stabilité thermique est recherchée pour permettre la recyclabilité des poudres dans ce procédé de prototypage.

Deux voies de synthèse sont utilisées pour préparer les Poly-aryle-éther-cétones. D'un côté un procédé dit de substitution nucléophile, dont l'accès aux monomères est difficile car il faut préparer des monomères fluorés ou chlorés spéciaux. Les conditions de synthèse du procédé de substitution nucléophile sont également difficiles (350°-400°C dans le diphenylsulfone, les traitements post-réactionnels sont contraignants (élimination des sels et du solvant difficiles).
D'un autre côté le procédé dit de substitution électrophile, qui peut être conduit à haute température comme à l'ambiante. L'avantage de ce second procédé tient à la possibilité de polymériser à température modérée (-20°C à 120°C) ce qui limite les réactions secondaires. Par ailleurs, les monomères comme les solvants sont plus accessibles industriellement.
Ce dernier procédé est largement décrit dans la littérature, comme par exemple dans US4841013, US4816556, US4912181, US4698393, WO9500446, US4716211, WO2011004164 ou encore WO2011004164.

La réaction est une substitution électrophile entre un ou plusieurs chlorures d'acide aromatiques et un ou plusieurs éthers aromatiques en présence d'un acide de Lewis. Elle a lieu dans un solvant, en présence parfois d'un dispersant (US4698393, WO9500446) et se fait généralement en deux temps avec une première phase à température ambiante voire en dessous de 0°C, puis la réaction est complétée à une température comprise entre 0°C et 120°C selon le solvant. On peut aussi opérer à plus haute température mais cette voie génère plus de réactions secondaires. Le mélange réactionnel est ensuite traité par un composé protique qui permet d'extraire tout ou partie de l'acide de Levis. Le choix du composé protique est fonction du solvant utilisé. Dans US4841013 et WO2011004164, US4716211, US4912181 ou WO2011004164 le solvant utilisé est le dichlorométhane et le composé protique est l'eau. Dans US4716556, WO9500446, le solvant est l'ortho-dichlorobenzène et le composé protique est le méthanol.

Il s'agit en fait d'avoir une solubilité suffisante du composé protique dans le solvant afin qu'il puisse soit réagir avec l'AlCl3 et/ou le décomplexer du polymère, par exemple, l'eau a une solubilité dans le dichlorométhane de 0.2% en poids à 20°C.

La demanderesse a maintenant découvert que non seulement on peut utiliser un composé protique qui est très peu soluble dans le solvant, mais que ce choix permet d'obtenir un polymère plus stable lorsque le composé protique est l'eau. Dans la présente invention, le solvant utilisé est aprotique, de préférence l'ortho-dichlorobenzène mais on peut utiliser aussi le difluoro benzène, le trichloro benzène ou leur mélange et le composé protique est l'eau ou l'eau acide qui ne se solubilisent qu'à de très faibles taux, typiquement 0.015 % dans l'ortho-dichlorobenzène. L'avantage d'éviter l'utilisation d'un alcool permet d'éviter des réactions de l'alcool sur les chaînes du Poly-aryle-éther-cétone et donc une meilleure stabilité. Si, dans le cas du dichlorométhane l'eau est utilisée en tant que composé protique, son action est incomplète car le polymère est obtenu sous forme de gel massif et ne permet pas d'être correctement traité par l'eau dans des temps raisonnables industriellement sans traitement mécanique difficile à mettre en oeuvre, ou certains additifs doivent être utilisés pour permettre une dispersion du PEKK dans le solvant et ainsi assurer une action assez efficace de l'eau en fin de polymérisation. En outre le taux de solide (masse du polymère / masse de solvant) typiquement utilisé dans l'invention peut être porté à des valeurs allant jusqu'à 10-%, ce qui n'est pas possible avec du dichlorométhane sans être confronté à un gel massif sans emploi de dispersant. Un autre avantage consiste à utiliser l'eau pour effectuer un entrainement azéotropique du solvant. Une étape de finition par un séchage sous vide de préférence à 30 mbar à une température supérieure à la température de transition vitreuse du polymère (Tg) de préférence au moins supérieure de 10 °C (Tg + 10°C), et plus particulièrement Tg + 30°C, Tg mesurée par DSC, assure une élimination des résiduels en particulier de solvant. Les Poly-aryle-éther-cétones préparées selon la présente invention présentent de très faibles taux de résiduels et d'acidité résiduelle, et peuvent ainsi avantageusement être utilisées dans les procédés de frittage laser, en minimisant les encrassements des systèmes optiques et avec une bonne recyclabilité.
Si dans le document US4698393, il est utilisé une combinaison ortho-dichlorobenzène en tant que solvant et de l'eau acide en tant que composé protique, cette étape de traitement n'est que partielle car elle est suivie d'un deuxième traitement au méthanol ce qui conduit ultérieurement à des réactions secondaires. De plus, il est utilisé un dispersant lors de la synthèse ce qui n'est pas le cas dans l'invention en objet.

### Résumé de l'invention :

L'invention concerne un procédé de préparation de Poly-aryle-éther-cétones consistant en les étapes suivantes :
   - mise en contact d'un ou plusieurs chlorures d'acide aromatiques, et d'un ou plusieurs éthers aromatiques en présence d'un acide de Lewis dans un solvant ne solubilisant l'eau qu'à une teneur inférieure à 0.05% à 25°C à une température comprise entre -5 et +25°C, sous agitation.
   - Achèvement de la polymérisation à une température comprise entre 50 et 120 °C.
   - Séparation d'une partie du solvant
   - Mise en contact du mélange réactionnel avec de l'eau sous agitation en présence éventuelle d'acide.
   - Séparation du Poly-aryle-éther-cétone et des effluents liquides.
   - Lavage du Poly-aryle-éther-cétone à l'aide d'eau en présence ou non d'acide et séparation des jus aqueux
   - Distillation azéotropique Sur le polymère contenant des résiduels de solvant et séparation des jus aqueux
   - Lavage et neutralisation de l'acidité des effluents et des particules de PEKK et séparation des jus aqueux.
   - Séchage du Poly-aryle-éther-cétone à une température supérieure à Tg + 20°C.

### Description détaillée :

Le procédé de l'invention est applicable à toute combinaison de di-chlorures d'acides aromatiques et de mono-chlorures d'acide et d'éthers aromatiques et/ou de biphenyls aromatiques.
De préférence on choisira les chlorures d'acide parmi le chlorure de téréphthaloyle (TCl) et le chlorure disophthaloyle (ICl) ou leur mélange, dans des proportions pour que dans la structure PAEK finale, il y ait un ratio de motif para-dicetophenyle / meta-dicetophenyle de 100 à 50% et de préférence de 85 à 55%% et plus particulièrement de 82 à 60%.
Les monochlorures d'acides seront choisis parmi le chlorure de benzoyle et le chlorure de benzene sulfonyle.
De préférence on choisira les éthers aromatiques ou les biphenyls aromatiques suivants:
Le 1,4-(phenoxybenzoyle)benzene (EKKE), le diphényle-éther, le biphenyle, le 4-phenoxybenzophénone, le 4-chlorobiphenyle, le 4-(4-phenoxyphenoxy)benzophenone, et le biphenyl 4-benzenesulphonylphenyl phenylether.

Les poly-arylène-éther-cétones, également nommés PAEK (PolyArylEtherKétone en langue anglaise) préparés selon l'invention répondent à la formule suivante:

(-Ar-X-) et (-Ar₁-Y-)

dans lesquelles :
Ar et Ar₁ désignent chacun un radical aromatique divalent ;
Ar et Ar₁ peuvent être choisis, de préférence, parmi le 1,3-phénylène, 1,4-phénylène, le 4,4'-biphénylène, le 1,4- naphthylène, le 1,5-naphthylène et le 2,6-naphthylène ;
X désigne un groupe électro-attracteur ; il peut être choisi, de préférence, parmi le groupe carbonyle et le groupe sulfonyle,
Y désigne un groupe choisi parmi un atome d'oxygène, un atome de soufre, un groupe alkylène, tel que -CH₂- et isopropylidène.

Dans ces motifs, au moins 50%, de préférence au moins 70% et plus particulièrement, au moins 80% des groupes X sont un groupe carbonyle, et au moins 50%, de préférence au moins 70% et plus particulièrement au moins 80% des groupes Y représentent un atome d'oxygène.
Selon un mode de réalisation préféré, 100% des groupes X désignent un groupe carbonyle et 100% des groupes Y représentent un atome d'oxygène.

Plus préférentiellement, le poly-arylène-éther-cétone (PAEK) peut être choisi parmi :
- un poly-éther-éther-cétone également nommé PEEK comprenant des motifs de formule I :
   Formule I
- un poly-éther-cétone également nommé PEK, comprenant des motifs de formule II : 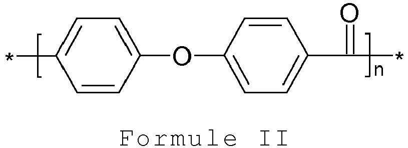
- un poly-éther-cétone-cétone également nommé PEKK, comprenant des motifs de formules IIIA, de formule IIIB et leur mélange : 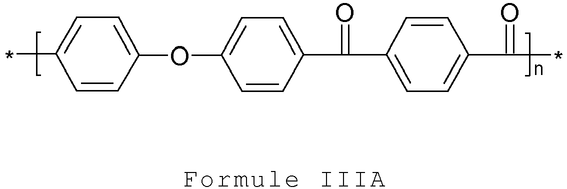 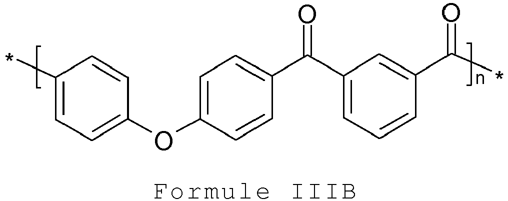
- et un poly-éther-éther-cétone-cétone également nommé PEEKK, comprenant des motifs de formules IV : 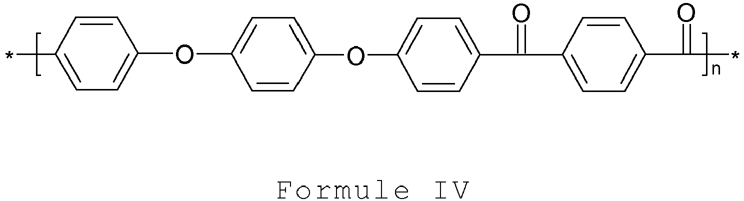
mais d'autres arrangements du groupe carbonyle et de l'atome d'oxygène sont également possibles.

Lors de la synthèses de ces Poly-aryle-éther-cétones, on utilisera les acides de Lewis suivant : Trichlorure d'aluminium anhydre, tribromure d'aluminium anhydre, pentachlorure ou pentafluorure d'antimoine, trichlorure d'indium, trichlorure de gallium, trichlorure de bore, trifuorure de bore, chlorure de zinc, de fer ou d'étain, trétrachlorure de titane, et pentachlorure de molybdène. De préférence il s'agit de trichlorure d'aluminium, et plus particulièrement de trichlorure d'aluminium anhydre anhydre.
Les solvants utilisés seront solvants des monomères et non solvant du polymère et solubilisant l'eau à une teneur < 0.2%, de préférence <0.05%. De préférence il s'agit d'orthodichloro-benzène.
Le procédé de synthèse peut être opéré dans un réacteur ou une succession de plusieurs réacteurs.
De préférence, le procédé de synthèse est conduit dans trois réacteurs placés verticalement ou horizontalement. Le premier réacteur est maintenu à une température comprise entre -20°C et + 40°C, de préférence entre - 5 et +20°C, et de façon encore préférée entre -5 et +5°C. Il contient tout ou partie de mélange de monomères , typiquement entre 10 et 100 % de la charge totale des monomères, de préférence entre 80 et 100% dans le solvant et entre 0 et 100%, et de préférence entre 80 et 100% en poids de la charge d'acide de Lewis, les compléments de la charge de monomères et d'acide de lewis se situant dans le réacteur 2.
Le réacteur 2 est maintenu à une température comprise entre 50 et 120 °C, de préférence entre 50 et 90°C.
Les temps de séjour sont adaptés de telle sorte que la conversion est maximisée en sortie du réacteur 2.

Le troisième réacteur contient l'eau, 10 à 50 % en poids de la masse réactionnelle, additionnée de 0 à 4% d'acide chlorhydrique pur. On y coule le mélange réactionnel, sous agitation entre 15 et 90°C, de préférence entre 15 et 30 °C et on maintient cette agitation au moins une heure. Selon une variante, on peut aussi additionner la phase aqueuse dans le réacteur 3 après y avoir introduit la phase réactionnelle.

Le mélange réactionnel résultant du réacteur 3 est séparé de la majorité des jus par un séparateur adapté.

Les jus sont soumis à un traitement adapté tel qu'une décantation permettant de valoriser le solvant après distillation et une élimination douce des effluents aqueux dans des dispositifs de valorisation ou d'élimination convenables industriellement.

La partie restante issue de l'étape de séparation décrite précédemment (polymère et solvant) est soumise à une distillation azéotropique ce qui permet une bonne élimination du solvant du polymère et sa valorisation.

La masse polymérique en suspension aqueuse est ensuite soumise à plusieurs étapes de lavage/neutralisation complémentaires avec de l'eau ou de l'eau acide suivi d'une étape de traitement avec une base telle que la soude ou l'ammoniaque 0.5 N, puis séparation.
Enfin une étape de séchage du polymère est effectué à une température > Tg +20°C sous 30 mbar.

Le produit obtenu présente un taux de résiduel en solvant inférieur à 100ppm et en éther aromatique résiduel inférieur 1% (on entend par éther aromatique résiduel des composés de masse molaire < 500g.mol-1 l'EKKE =470g/mol).

Il présente une très bonne stabilité thermique évaluée par la quasi-constance de la viscosité inhérente en solution mesurée dans l'acide sulfurique 96 % selon la Norme ISO 307 suite à un traitement à 280 °C pendant 24 h sous azote, typiquement moins de 2 % de variation de la viscosité entre la poudre de départ et le produit après 24 heures de traitement.

Le produit est obtenu sous forme de particules grossières, auquel on peut rajouter un agent facilitant l'écoulement tel que la silice dans des teneurs faibles, typiquement < 0.1% en poids.
Il peut être utilisé dans un procédé de moulage d'un objet à l'aide d'un rayonnement électromagnétique (notamment laser, consistant à irradier couche par couche la poudre, selon un tracé déterminé, afin de fondre localement le poly-aryl éther -cétone et obtenir le dit objet.

### Exemple 1 :

La teneur en résiduels organiques solvant est évaluée par chromatographie en phase gazeuse selon le protocole suivant :

### Protocoles de préparation des échantillons

Extraction au dichlorométhane par sonication pendant 20min :
- Pe=20mg-50mg d'échantillon
- 0,9ml dichlorométhane
- 0,1ml de standard interne (pentadécane) en solution dans le dichlorométhane.

Conditions opératoires GC : VARIAN 3800 avec passeur CP8400
- Colonne : BPX35 L = 32 m ; DI = 0,25 mm ; Film = 1 µm
- Débit (mode constant)= 1,3ml/min
- Température du détecteur FID : 300°C
- Température de l'injecteur 1177: 250°C
- Split ratio= 25
- Programmation de la température du four : 40°C(2min) - > 280°C (2min) à 8°C/min
- Mode d'injection : passeur automatique
- Volume d'injection= 1µl
- Gaz vecteur: hélium

### Exemple 2 :

Protocole de mesure des éthers aromatiques résiduels : Les échantillons sont mis en solution dans un mélange BTF/HFIP en présence d'un standard interne.

Toutes les analyses ont été réalisées sur un GC VARIAN® 3800 équipé d'un injecteur on-column 1041 et d'un détecteur FID.
- Colonne : MXT 500 Sim Dist 6m / 320µm / ef=0,15µm
- Température Det (FID) =400°C
- Température Injecteur 1041= régulé à T ≤ 40°C
- Débit colonne (constant flow) = 3ml/min
- Programmation four = 40°C (2min) → 150°C à 8°C/min 150°C (0min) → 330°C(Omin) à 15°C/min 330°C (0min) → 360°C(5min) à 25°C/min
- Gaz vecteur = hélium
- Mode d'injection : dans la colonne avec le point d'injection situé dans la partie régulé par le four.
- Volume injecté=0,5µl

### Exemple 3 :

### Exemple comparatif - traitement au MeOH

Dans un réacteur de 2L muni d'une agitation sous balayage d'azote sec, on ajoute de l'ortho dichloro-benzène (1600g), et de l'EKKE (65g). On ajoute ensuite les chlorures d'acides : Le chlorure de téréphthaloyle (5.4g), le chlorure d'isophthaloyle (22.2g) et le chlorure de benzoyle (0.38g). Le réacteur est ensuite refroidi à -5°C. L'AlCl3 (115g) est ensuite ajouté tout en maintenant la température dans le réacteur inférieure à 5°C. Après un temps d'homogénéisation (environ 10minutes), la température du réacteur est augmentée à 5°C par minutes jusqu'à 90°C. La polymérisation débute lors de cette montée en température. Le réacteur est maintenu pendant 30 minute à 90°C avant de le refroidir à 30°C. On ajoute ensuite 400g de méthanol lentement afin de ne pas dépasser une température de 60°C dans le réacteur. Le réacteur est maintenu sous agitation pendant 2 heures avant d'être refroidi à 30°C.
Le milieu réactionnel est ensuite retiré du réacteur et on effectue une première filtration sur fritté où une partie du solvant est ainsi éliminé du PEKK. Le PEKK humide est ensuite rincé sur le fritté par 300g de MeOH, il est ensuite ajouté dans un bécher avec 700g de MeOH et est mis sous agitation pendant 2 heures. Une nouvelle filtration sur fritté est réalisée et le PEKK est à nouveau rincé par 300gr de MeOH. Le PEKK humide est ensuite ajouté dans un bécher avec 750g d'une solution aqueuse d'HCl à 3.3% massique et est mis sous agitation pendant 2 heures. Une nouvelle filtration sur fritté est réalisée et le PEKK est ensuite rincé par 450g d'eau. Il est ensuite ajouté dans un bécher avec 400g d'une solution sodique à 0.5N et est mis sous agitation pendant 2 heures. Le produit après filtration est ensuite lavé plusieurs fois à l'eau déminéralisée afin d'éliminer la soude en excès.
Le produit est ensuite mis à sécher à 180°C pendant 12 heures en étuve sous vide.
On obtient un PEKK avec une viscosité en solution dans l'acide sulfurique de 0.87 dl/g.

Après un broyage adapté, la poudre obtenue est placée dans un tube sous balayage d'azote chauffée à 280°C pendant 24 heures. La poudre est ensuite à nouveau analysée en viscosité en solution et on trouve une viscosité de 0.90 dl/g.

### Exemple 4 (comparatif) :

### Exemple comparatif - traitement à l'eau, lavage au méthanol

Dans un réacteur de 2L muni d'une agitation sous balayage d'azote sec, on ajoute de l'ortho dichloro-benzène (1600g), et de l'EKKE (65g). On ajoute ensuite les chlorures d'acides : Le chlorure de téréphthaloyle (5.4g), le chlorure d'isophthaloyle (22.2g) et le chlorure de benzoyle (0.38g). Le réacteur est ensuite refroidit à -5°C. L'AlCl3 (115g) est ensuite ajouté tout en maintenant la température dans le réacteur inférieur à 5°C. Après, un temps d'homogénéisation (environ 10minutes), la température du réacteur est augmentée à 5°C par minutes jusqu'à 90°C. La polymérisation débute lors de cette montée en température. Le réacteur est maintenu pendant 30 minutes à 90°C avant de le refroidir à 30°C. On ajoute ensuite 400g d'eau acide (HCl 3%) lentement afin de ne pas dépasser une température de 60°C dans le réacteur. Le réacteur est maintenu sous agitation pendant 2 heures avant d'être refroidit à 30°C. Les étapes de filtration, lavage et séchage sont similaires à ceux de l'exemple 3.
On obtient un PEKK avec une viscosité en solution dans l'acide sulfurique de 0.84 dl/g.

Après un broyage adapté, la poudre obtenue est placée dans un tube sous balayage d'azote chauffée à 280°C pendant 24 heures. La poudre est ensuite à nouveau analysée en viscosité en solution et on trouve une viscosité de 0.89 dl/g.

### Exemple 5 (invention) :

### Exemple comparatif - traitement à l'eau, distillation azéotropique et lavages à l'eau

Les étapes de synthèse de cet exemple sont similaires à celle de l'exemple 5.
Le milieu réactionnel est ensuite retiré du réacteur et on effectue une première filtration sur fritté. Le PEKK humide est ensuite mis dans un bécher avec 700g d'une solution aqueuse d'HCl à 3%, et mis sous agitation pendant 2h. Une nouvelle filtration est réalisée. Le PEKK humide est alors placé dans un réacteur de 2L muni d'un Dean-Stark et contenant 800g d'eau. Environ 600g d'un mélange d'eau et de solvant est éliminé par distillation azéotropique à 98°C, et le restant est filtré sur fritté. Le PEKK humide ainsi récupéré est ensuite mis dans un bécher avec 700g d'une solution aqueuse d'HCl à 3%, et mis sous agitation pendant 2h. Une nouvelle filtration est réalisée, et l'opération lavage puis filtration est réalisé une seconde fois, puis le PEKK humide est rincé sur le filtre avec 450g d'eau. Il est ensuite ajouté dans un bécher avec 400g d'une solution sodique à 0.5N et est mis sous agitation pendant 2 heures. Le produit après filtration est ensuite lavé plusieurs fois à l'eau déminéralisée afin d'éliminer la soude en excès.
Le produit est ensuite mis à séché à 180°C pendant 12 heures en étuve sous vide.
On obtient un PEKK avec une viscosité en solution dans l'acide sulfurique de 0.97 dl/g.

Après un broyage adapté, la poudre obtenue est placée dans un tube sous balayage d'azote chauffée à 280°C pendant 24 heures. La poudre est ensuite à nouveau analysée en viscosité en solution et on trouve une viscosité de 0.96 dl/g.

| | | Viscosité inhérente à t0 | Viscosité inhérente après 24h à 280°C | Evolution de la viscosité inhérente |
|---|---|---|---|---|
| Exemple 3 | traitement et lavage au méthanol | 0.87 | 0.90 | + 3.4% |
| Exemple 4 | traitement à l'eau et lavage au méthanol | 0.84 | 0.89 | + 5.9% |
| Exemple 5 (invention) | traitement à l'eau et distillation azéotropique et lavage à l'eau | 0.97 | 0.96 | - 1 % |

### Exemple 6 :

Produit A, OxPEKK SP: procédé de fabrication faisant intervenir du méthanol, caractérisé par une teneur en résidel en méthanol mesurée à 0.1% par RMN teneur en ortho dichlorobenzène résiduel mesurée à 0.7% (par GC), et teneur en EKKE résiduelle mesurée par GC à 1.13 %
Produit B : procédé de fabrication de l'exemple 5. Pas de méthanol détecté, teneur en ortho dichloro-benzène résiduel < 100ppm et teneur en EKKE résiduel mesurée par GC à 0.28%.

Dans un godet en verre cylindrique (diamètre=5cm et hauteur =7cm), on ajoute 10g de poudre de PEKK. Sur ce godet en verre, on met une plaque en verre (Longueur = 10cm, largeur = 7 cm et épaisseur = 0.4cm). Le godet est ensuite inséré dans un four électrique cylindrique et la poudre est portée à 285°C pendant 8 heures. Au cours de ce chauffage, les volatils se subliment et/ou se condensent sur la plaque de verre refroidie par le dessus par l'air ambiant.

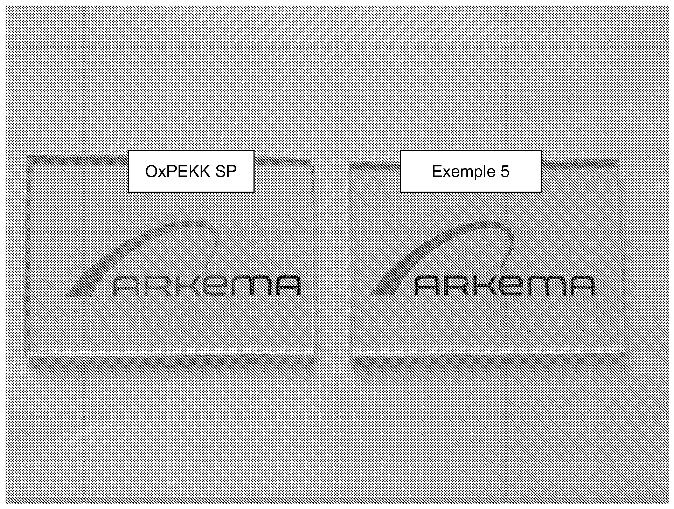

Sur la photo 1 on constate que dans le cas de l'OxPEKK SP, il y a beaucoup plus de dépôts que dans le cas du PEKK de l'exemple 5

## Revendications

1. Procédé de préparation de poly-aryle-éther-cétones consistant en les étapes suivantes :
- mise en contact d'un ou plusieurs chlorures d'acide aromatiques, et d'un ou plusieurs éthers aromatiques en présence d'un acide de Lewis dans un solvant ne solubilisant l'eau qu'à une teneur inférieure à 0.05% à 25°C à une température comprise entre -5 et +25°C, sous agitation ;
- achèvement de la polymérisation à une température comprise entre 50 et 120 °C ;
- séparation d'une partie du solvant ;
- mise en contact du mélange réactionnel avec de l'eau sous agitation en présence éventuelle d'acide ;
- séparation du poly-aryle-éther-cétone et des effluents liquides ;
- lavage du poly-aryle-éther-cétone à l'aide d'eau en présence ou non d'acide et séparation des jus aqueux ;
- distillation azéotropique sur le polymère contenant des résiduels de solvant et séparation des jus aqueux ;
- lavage et neutralisation de l'acidité des effluents et des particules de PAEK et séparation des jus aqueux ; et
- séchage du poly-aryle-éther-cétone à une température supérieure à Tg + 20°C.

2. Procédé selon la revendication 1 dans lequel les poly-aryle-éther-cétone sont des poly-éther-éther-cétone.

3. Procédé selon la revendication 2 dans lequel l'éther aromatique est le (1,4-phenoxybenzoyl)benzène).

4. Procédé selon la revendication 2 dans lequel les chlorures d'acides sont choisis parmi le chlorure de téréphtaloyle et le chlorure d'iso phtaloyle ou leur mélange.

5. Procédé selon la revendication 1 dans lequel le solvant est l'ortho dichloro benzène.

## Patentansprüche

1. Verfahren zur Herstellung von Polyaryletherketonen, das aus den folgenden Schritten besteht:
- Inkontaktbringen einer oder mehrerer aromatischer Säurechloride und eines oder mehrerer aromatischer Ether in Gegenwart einer Lewis-Säure in einem Lösungsmittel, das Wasser nur bis zu einem Gehalt kleiner 0,05 % bei 25 °C auflöst, bei einer Temperatur im Bereich zwischen -5 und +25 °C unter Rühren;
- Beenden der Polymerisation bei einer Temperatur im Bereich zwischen 50 und 120 °C ;
- Abtrennen eines Teils des Lösungsmittels;
- Inkontaktbringen des Reaktionsgemischs mit Wasser unter Rühren gegebenenfalls in Gegenwart von Säure;
- Abtrennen des Polyaryletherketons und der flüssigen Abflüsse;
- Waschen des Polyaryletherketons mithilfe von Wasser in Gegenwart oder Abwesenheit von Säure und Abtrennen der wässrigen Flotten;
- azeotropes Destillieren auf dem Polymer, das Lösungsmittelrückstände enthält, und Abtrennen der wässrigen Flotten;
- Waschen und Neutralisieren der Azidität der Abflüsse und der PAEK-Partikel und Abtrennen der wässrigen Flotten; und
- Trocknen des Polyaryletherketons bei einer Temperatur größer Tg +20 °C.

2. Verfahren nach Anspruch 1, bei dem die Polyaryletherketone Polyetheretherketone sind.

3. Verfahren nach Anspruch 2, wobei der aromatische Ether (1,4-Phenoxybenzoylbenzol) ist.

4. Verfahren nach Anspruch 2, wobei die Säurechloride ausgewählt sind aus Terephthaloylchlorid und Isophthaloylchlorid oder einer Mischung davon.

5. Verfahren nach Anspruch 1, bei dem das Lösungsmittel ortho-Dichlorbenzol ist.

## Claims

1. Process for preparing polyaryl ether ketones, which consists of the following steps:
- placing one or more aromatic acid chlorides and one or more aromatic ethers in contact with a Lewis acid in a solvent which dissolves water only to a content of less than 0.05% at 25°C at a temperature of between -5 and +25°C, with stirring;
- completion of the polymerization at a temperature of between 50 and 120°C;
- separation of part of the solvent;
- placing the reaction mixture in contact with water with stirring in the optional presence of acid;
- separation of the polyaryl ether ketones and of the liquid effluents;
- washing of the polyaryl ether ketones with water in the presence or absence of acid and separation of the aqueous liquors;
- azeotropic distillation on the polymer containing residual solvent and separation of the aqueous liquors;
- washing and neutralization of the acidity of the effluents and of the PAEK particles and separation of the aqueous liquors; and
- drying of the polyaryl ether ketones at a temperature above Tg +20°C.

2. Process according to Claim 1, in which the polyaryl ether ketones are polyether ether ketones.

3. Process according to Claim 2, in which the aromatic ether is (1,4-phenoxybenzoyl)benzene).

4. Process according to Claim 2, in which the acid chlorides are chosen from terephthaloyl chloride and isophthaloyl chloride or a mixture thereof.

5. Process according to Claim 1, in which the solvent is ortho-dichlorobenzene.
